# EUROPEAN PATENT APPLICATION

(11) **EP 1 453 033 A2**
(43) Date of publication of application: **01.09.2004**
(21) Application number: 04250294.8
(22) Date of filing: 21.01.2004
(51) Int. Cl.: G09G 5/10, G06F 3/14, G09G 3/28

(54) **Multi-display video display system and method**

(30) Priority: 21.01.2003 JP 2003011815
(71) Applicant: Pioneer Corporation, Tokyo-to (JP)
(72) Inventor: Ando, Hiroshi, Nakakoma-gun, Yamanashi-ken (JP); Yokota, Hideaki, Nakakoma-gun, Yamanashi-ken (JP); Nagakubo, Tetsuro, Nakakoma-gun, Yamanashi-ken (JP)
(74) Representative: Townsend, Victoria Jayne

(57) **Abstract**

A multi-display video display system (100) includes a plurality of display units (20A, 20B, 20C, 20D) and video signal processing units (10A, 10B, 10C, 10D) respectively associated with the display units, and displays a single image by using the video signal processing units. The video signal processing units (10A, 10B, 10C, 10D) receive a video signal of the same original image, divide the video signal so as to be associated with the display units (20A, 20B, 20C, 20D), and generate a division display signal, receive the video signal of the same original image, acquire an average luminance level based on the video signal preceding the division and average luminance levels respectively for video signals obtained by the division, select one from among the acquired average luminance levels, and supply it to the display units (20A, 20B, 20C, 20D), respectively. The display units (20A, 20B, 20C, 20D) control display brightness on the basis of the average luminance level supplied from the video signal processing units (10A, 10B, 10C, 10D), respectively.

## Description

### BACKGROUND OF THE INVENTION

### 1. Filed of the Invention

The present invention relates to a multi-display video display system and method for displaying a single image by using a plurality of displays, and in particular to a multi-display video display system capable of suitably and rapidly controlling the brightness of the display.

### 2. Description of the Related Art

Systems in which a large screen is formed by using a plurality of displays and a single image is expanded and displayed on the screen are known. On the other hand, there is a system using plasma display panels as a suitable display suitable to such systems.

In the plasma display panels, it is desirable to control the display brightness based on the average luminance level in order to manage the life and temperature of the panels. In the above described system as well, it is desirable to control the display brightness in individual plasma display panels, which form the large screen.

As a technique for controlling the display brightness in individual panels in the above-described system using a combination of plasma display panels, a technique of acquiring an average luminance level of an image to be displayed on each of plasma display panels and the display brightness on each panel is controlled on the basis of the average luminance level is known (see, for example, Japanese Patent Application Laid-Open Nos. 8-205056, 9-46618, and 10-124003).

In the technique disclosed in the Japanese Patent Application Laid-Open, however, the display brightness on each panel is controlled on the basis of the average luminance level of an image to be displayed on each of plasma display panels. Therefore, information exchange between control devices for driving the individual panels becomes necessary in order to hold down the brightness dispersion among the panels. This results in a problem that it becomes difficult to rapidly control the display brightness on the basis of the average luminance level.

### SUMMARY OF THE INVENTION

An object of the present invention is to provide a multi-display video display system capable of rapidly controlling the display brightness in respective display panels.

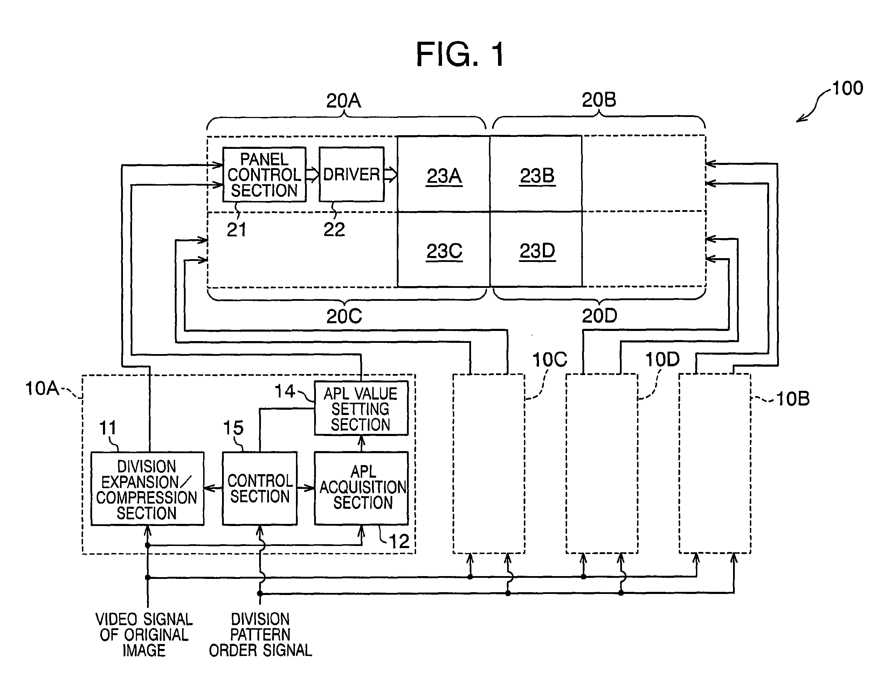

The above object of the present invention can be achieved by a multi-display video display system as shown in FIG. 1. The system (100) includes a plurality of display units (20A, 20B, 20C, 20D) and video signal processing units (10A, 10B, 10C, 10D) respectively associated with the display units. The display units display a single image. In the system, each of the video signal processing units is provided with: a generation section (11) for receiving a video signal of a same original image, dividing the video signal so as to be associated with the display units, and thereby generating a division display signal; an average luminance level acquisition section (12) for receiving the video signal of the same original image, acquiring a first average luminance level based on the video signal preceding the division, and acquiring second average luminance levels respectively of video signals obtained by the division; and an average luminance level setting section (14) for selecting one from among the first average luminance level and the second average luminance levels, and supplying the selected one to a display unit associated with the video signal processing unit. Further, each of the display units is provided with a control device (21) for controlling display brightness on the basis of an average luminance level supplied from a video signal processing unit associated with the display unit.

### BRIEF DESCRIPTION OF THE DRAWING

FIG. 1 is a block diagram showing an embodiment of a multi-display video display system according to the present invention.

### DESCRIPTION OF THE PREFERRED EMBODIMENT

Hereafter, an embodiment of a multi-display video display system according to the present invention will be described with reference to FIG. 1. FIG. 1 is a block diagram showing a multi-display video display system in the present embodiment.

As shown in FIG. 1, a multi-display video display system 100 in the present embodiment includes first to fourth video signal processing units 10A to 10D, and first to fourth display units 20A to 20D respectively for receiving video signals output from the first to fourth video signal processing units 10A to 10D.

The first video signal processing unit 10A includes a division expansion/compression section 11 for receiving a video signal of an original image and generating an expanded image or compressed image of a divided image, anAPL acquisition section 12 for acquiring an average luminance level (APL) value of the whole input original image and acquiring average luminance level values of divided four images, an APL value setting section 14 for selecting a predetermined average luminance level value from among five average luminance level values acquiredby the APL acquisition section 12 , and a control section 15 for controlling the sections in the first video signal processing unit 10A. The division expansion/compression section 11 is configured so as to be able to widely cope with n by m multi-display. By using as many video signal processing units as the number of displays, therefore, not only 2 by 2 multi-display shown as the present embodiment, but also 3 by 3 multi-display, 1 by 3 multi-display or the like can be executed.

The second to fourth video signal processing units 10B to 10D are configured in the same way as the first video signal processing unit 10A.

The first display unit 20A includes a panel control section 21 for receiving a video signal output from the first video signal processing unit 10A, a driver 22 for generating a drive pulse on the basis of a signal output from the panel control section 21, and a first plasma display panel 23A driven by the driver 22.

In the same way as the first display unit 20A, each of the second to fourth display units 20B to 20D includes a panel control section 21 and a driver 22.

Furthermore, the second to fourth display units 20B to 20D include second to fourth plasma display panels 23B to 23D, respectively.

As shown in FIG. 1, the first to fourth plasma display panels 23A to 23D are arranged so as to form two rows and two columns and so as to be continuous to each other. Images obtained by dividing a single image to be displayed into four are displayed on the plasma display panels, respectively. As a whole, one image (the above-described single image) is displayed by the four plasma display panels 23A to 23D. In the example shown in FIG. 1, the first plasma display panel 23A takes charge of an upper left region of the single image. The second plasma display panel 23B takes charge of an upper right region of the single image. The third plasma display panel 23C takes charge of a lower left region of the single image. The fourth plasma display panel 23D takes charge of a lower right region of the single image.

Operation of the multi-display video display system 100 in the present embodiment will now be described.

As shown in FIG. 1, a video signal of the original image, which is the single image, and a division pattern order signal are supplied to each of the first to fourth video signal processing units 10A to 10D. The video signal of the original image is input to the division expansion/compression section 11 and the APL acquisition section 12. The division pattern order signal is input to the control section 15.

Values of n and m, which are information required to execute the n by m multi-display, are included in the division pattern order signal. For example, in the case shown in FIG. 1, information indicating that n = 2 and m = 2 is included in the division pattern order signal supplied to the first video signal processing unit 10A.

Furthermore, a command for specifying an APL value selected by the APL value setting section 14 in each of the first to fourth video signal processing units 20A to 20D is included in the division pattern order signal. The specification of the APL value will be described later.

The division expansion/compression section 11 in each of the video signal processing units 10A to 10D generates a video signal of an associated division screen on the basis of the input video signal of the single image. The control section 15 gives an order that a division area of the image should be generated, to the division expansion/compression section 11 in each of the video signal processing units 10A to 10D. For example, in the first video signal processing unit 10A, the control section 15 sends an order that the area of the division image to be generated should be the upper left region, to the division expansion/compression section 11. The division expansion/compression section 11 extracts a division image of a predetermined region from the original image in accordance with the order from the control section 15, expands or compresses the extracted division image to a suitable size in order to display the extracted division image on an associated plasma display panel among the plasma display panels 23A to 23D, and outputs a resultant image toward the associated plasma display panel among the plasma display panels 23A to 23D as the video signal of the division image.

The APL acquisition section 12 in each of the video signal processing units 10A to 10D calculates an average luminance value of the original image in real time on the basis of the video signal of the original image. Furthermore, the APL acquisition section 12 calculates respective average luminance values for all division images (four division images in the case of FIG. 1) in real time.

The APL value setting section 14 selects one APL value from among five APL values which have been calculated by the APL acquisition section 12 in accordance with the order given by the control section 15. The order given by the control section 15 is based on the command for specifying an APL value included in the above-described division pattern order signal. Contents of this command may be an order that a maximum value should be selected from average luminance values of the four division images, or may be an order that the average luminance value of the original image should be selected. A common command is given to all video signal processing units 10A to 10D. Therefore, the same average luminance level value is output from all video signal processing units 10A to 10D. The average luminance level value selected in accordance with the command is output from the APL value setting section 14 in the video signal processing units 10A to 10D toward the associated display unit 20A to 20D, respectively.

The panel control section 21 in each of the display units 20A to 20D adjusts the luminance of the division image on the basis of the average luminance level value received from the associated one of video signal processing units 10A to 10D. The driver 22 in each of the display units 20A to 20D drives the associated one of the plasma display panels 23A to 23D in accordance with a video signal output from the panel control section 21.

The panel control section 21 controls the brightness of the display image in the associated one of the plasma display panels 23A to 23D in accordance with the input average luminance value. The panel control section 21 controls the brightness of the display screen in the associated one of the plasma display panels 23A to 23D by controlling the number of sustain pulses (light emission sustaining pulses). When the average luminance level value is high, the brightness of the display screen can be lowered by decreasing the number of sustain pulses output from the driver 22. For example, the total number of sustain pulses used to display one screen is controlled on the basis of the average luminance level of the video signal forming one screen so as to hold down the power dissipation to a predetermined value or less.

As described above, the same average luminance value is given to all display units 20A to 20D, and the luminance is controlled by using the same method in all display units 20A to 20D. Among the plasma display panels 23A to 23D, therefore, dispersion in luminance adjustment does not occur.

In this way, in the multi-display video display system 100 in the present embodiment, the average luminance level value of the original image or a division image is acquired and a level of a video signal of an expanded image is controlled in each display unit 20 by using the data of the average luminance level value. Without exchange of information among the display units 20, therefore, dispersion of display brightness among display panels can be prevented and the acquired average luminance level can be rapidly reflected into brightness control of the display image.

When the maximum value among the average luminance values of the division images is selected for the display units 20A to 20D, there is an advantage that the display luminance of all plasma display panels 23A to 23D can be certainly held down. For example, when there is a difference among luminance values of images to be displayed on plasma display panels, controlling luminance of each plasma display on the basis of the average luminance of the original image incurs a fear that luminance of a specific plasma display panel will become high inadvertently. When luminance control is executed on the basis of the maximum value among the average luminance values of the division images, however, it becomes possible to always hold down the luminance of a plasma display panel that emits the brightest light. In this case, therefore, the life and temperature of the plasma display panels can be managed more accurately.

As heretofore described, in the present embodiment, each of the video signal processing units 10A to 10D includes: a division expansion/compression section 11 for receiving a video signal of the same original image, dividing the video signal so as to be associated with the display units 20A to 20D, and generating a division display signal; an APL acquisition section 12 for receiving the video signal of the same original image, acquiring an average luminance level based on the video signal preceding the division, and acquiring average luminance levels respectively for video signals obtained by the division; and an APL setting section 14 for selecting one from among the average luminance levels acquired by the APL acquisition section 12 and supplying the selected one average luminance level to a display unit included in the display units 20A to 20D and associated with the video signal processing unit. Each of the display units 20A to 20D includes a panel control section 21 for controlling the display brightness on the basis of the average luminance level supplied from associated one of the video signal processing units 10A to 10D. Therefore, dispersion of display brightness among display panels can be prevented, and the acquired average luminance level can be rapidly reflected into brightness control of the display image. As a result, the display quality of the multi-display can be improved.

In the above-described embodiment, a system using plasma display panels has been described. However, the present invention can also be applied to a multi-display video display system using other displays.

The invention is not limited to the embodiments or the example as described above, and suitable changes can be made within the range consistent with the content or idea of the invention, which can be read from the claims and the entire specifications, and a display apparatus or a method accompanying such changes is also included in the technical idea of the invention.

## Claims

1. A multi-display video display system (100) including a plurality of displays (20A, 20B, 20C, 20D) and video signal processing units (10A, 10B, 10C, 10D) respectively associated with the displays, a single image being displayed by using the displays,
**characterized in that** each of the video signal processing units comprises:
a generation section (11) which receives a video signal of a same original image, and which divides the video signal so as to be associated with the displays, and thereby generating a division display signal;
an average luminance level acquisition section (12) which receives the video signal of the same original image, and which acquires a first average luminance level based on the video signal preceding the division, acquiring second average luminance levels respectively of video signals obtained by the division; and
an average luminance level setting section (14) which selects one from among the first average luminance level and the second average luminance levels, and supplying the selected one to a display associated with the video signal processing unit, and
wherein each of the displays comprises a control device (21) which controls display brightness on the basis of an average luminance level supplied from a video signal processing unit associated with the display.

2. The multi-display video display system according to claim 1, wherein the average luminance level setting sections (14) in the video signal processing units supply a same average luminance level to the displays, respectively.

3. The multi-display video display system according to claim 1, wherein the average luminance level setting sections (14) in the video signal processing units supply a second average luminance level that is a maximum among the second average luminance levels to the displays, respectively.

4. A method of displaying image in a multi-display video display system (100) including a plurality of displays (20A, 20B, 20C, 20D) and video signal processing units (10A, 10B, 10C, 10D) respectively associated with the displays, a single image being displayed by using the displays, **characterized in that** the method comprising the processes of:
receiving a video signal of a same original image, in each of the video signal processing units;
dividing the video signal so as to be associated with the displays, in each of the video signal processing units;
generating a division display signal, in each of the video signal processing units;
acquiring a first average luminance level based on the video signal preceding the division, in each of the video signal processing units;
acquiring second average luminance levels respectively of video signals obtained by the division, in each of the video signal processing units;
selecting one from among the first average luminance level and the second average luminance levels, in each of the video signal processing units;
supplying the selected one to a display associated with the video signal processing unit, in each of the video signal processing units; and
controlling display brightness in each of the displays on the basis of the supplied average luminance level.

5. The method according to claim 4, wherein the process of supplying supplies a same average luminance level to each of the displays.

6. The method according to claim 4, wherein the process of supplying supplies a second average luminance level that is a maximum among the second average luminance levels to each of the displays.
